# FASCICULE DE BREVET EUROPEEN

(11) **EP 0 573 769 B1**
(45) Date de publication et mention de la délivrance du brevet: **19.08.1998**
(21) Numéro de dépôt: 93106940.5
(22) Date de dépôt: 29.04.1993
(51) Int. Cl.: B01D 53/34, C21B 3/08

(54) **Procédé pour la désulfuration de gaz formé lors de la granulation du laitier de haut fourneau**
Entschwefelungsverfahren für Gase, die bei der Granulierung von Hochofenschlacken gebildet werden
Desulphurisation process for gases formed during the granulation of blast furnace slag

(30) Priorité: 02.06.1992 LU 88127
(43) Date de publication de la demande: 15.12.1993
(73) Titulaire: PAUL WURTH S.A., 1122 Luxembourg (LU)
(72) Inventeur: Faber, Ernest, L-6212 Consdorf (LU); Frieden, Romain, L-6235 Beidweiler (LU); Solvi, Marc, L-3961 Ehlange Sur Mess (LU); Schmit, Louis, L-1451 Luxembourg (LU); Ulveling, Léon, L-2319 Luxembourg-Howald (LU)
(74) Mandataire: Freylinger, Ernest T.

(56) Documents cités:
- EP-A- 0 011 517
- WO-A-92/02292
- LU-A- 68 028
- LU-A- 85 508
- LU-A- 86 054
- US-A- 3 738 820
- US-A- 3 912 487
- US-A- 5 082 483

## Description

La présente invention concerne un procédé pour le traitement d'un mélange de vapeurs d'eau et d'air pollué par des gaz sulfurés qui se forme lors de la production de granulation de laitier de haut fourneau.

L'invention concerne également une installation pour la mise en oeuvre de ce procédé.

Plusieurs procédés et installations sont connus actuellement pour la granulation de laitier de haut fourneau. Il est par exemple connu d'injecter un puissant jet d'eau à l'aide d'une tête de pulvérisation dans un débit de laitier fondu. Des réalisations avantageuses de telles têtes de pulvérisation sont décrites par exemple dans la demande de brevet européen ES 0 082 279.

Un problème mal contrôlé dans ce genre d'installation est constitué par les vapeurs d'eau contaminées entre autres par des gaz sulfurés dont le sulfure d'hydrogène H₂S et le dioxyde de soufre SO₂, générées en quantités importantes et à des débits essentiellement variables lors de l'injection d'eau dans le laitier fondu.

Après la granulation, le laitier peut être déshydraté par exemple dans un cylindre rotatif délimité à l'extérieur par une surface filtrante. Ce procédé et l'installation correspondante sont décrites dans le brevet des Etats-Unis US-4,205,855 auquel le lecteur voudrait bien se référer pour des explications détaillées supplémentaires. Lors de cette déshydratation du laitier, il se forme aussi un mélange de vapeurs d'eau et d'air, pollué par des gaz sulfurés.

Parfois, les vapeurs polluées produites pendant la granulation sont rejetées sans traitement dans l'atmosphère, ce qui constitue naturellement une nuisance pour les habitants aux alentours des usines, vu l'odeur particulièrement désagréable et la toxicité du H₂S.

Certaines installations sont équipées d'une tour de condensation fermée qui est située au-dessus du bassin de granulation dans lequel le laitier est refroidi. Dans cette tour de condensation, des gicleurs aspergent de l'eau sur les gaz et vapeurs chauds ascendants par convection. L'eau d'arrosage issue des gicleurs et les condensats sont récupérés par des goulottes situées en-dessous des gicleurs. Ces installations ne donnent cependant pas entièrement satisfaction. Vu que les débits de laitier et par conséquent les débits de vapeurs et de gaz ascendants sont variables en fonction du temps, il est en effet difficile de créer et de maintenir une dépression stable et suffisante par condensation des vapeurs d'eau dans la zone des gicleurs. A certains moments, il se produit ainsi une surpression dans la zone de condensation de la tour, qui empêche les vapeurs de remonter jusqu'aux gicleurs. Une condensation des vapeurs d'eau suffisante et une élimination efficace des gaz sulfurés n'est plus assurée. Des vapeurs polluées peuvent s'échapper alors d'une manière incontrôlée à l'air libre.

Le brevet américain US 5,082,483 décrit une installation de granulation de laitier de haut fourneau dans laquelle les gaz sont amenés dans une enceinte fermée dans laquelle une solution aqueuse est aspergée sur les gaz ascendants afin de les purifier. Après cette purification, les gaz sont évacués vers l'extérieur de l'enceinte. La demande de brevet allemand DE-A-3511958, déposée le 2 avril 1985, décrit une installation de granulation de laitier de haut fourneau qui utilise un système fermé de circulation de gaz. Les vapeurs générées lors de l'injection d'eau dans le laitier fondu, sont entraînées par un jet d'eau directement dans le bassin de granulation rempli d'eau pour y être condensées partiellement. Les vapeurs et les gaz résiduels émanant du bassin de granulation sont arrosés d'eau, à l'aide de gicleurs installés dans un condenseur situé au-dessus de la réserve d'eau. Les vapeurs ascendantes et l'eau pulvérisée constituent en conséquence deux flux à contre-courant. Il est prétendu que les gaz et vapeurs résiduels qui ne sont pas éliminés par ce lavage sont reconduits vers la tête de pulvérisation par une circulation interne, qui se créerait dans l'installation. Le document allemand ne mentionne pas comment on évite une surpression dans l'installation, qui engendre une fuite incontrôlée de gaz pollués vers l'extérieur. Ce système ne peut pas non plus être utilisé pour équiper une installation existante. L'installation de granulation doit en effet être construite de sorte à constituer un système parfaitement étanche pour les gaz.

Le but de la présente invention est de proposer un procédé amélioré pour le traitement d'un mélange d'air et de vapeurs pollué par des gaz sulfurés, formé lors de la production de granulat de laitier de haut fourneau par injection d'un jet d'eau dans le débit de laitier fondu et qui permet de traiter d'une manière efficace des débits de vapeurs polluées très variables, et qui empêche que de l'air ou des vapeurs non traités ne s'échappent d'une façon incontrôlée à l'extérieur de l'installation.

Conformément à la présente invention, ce but est atteint essentiellement par le fait qu'on canalise d'abord ledit mélange dans un flux ascendant et qu'ensuite le mélange s'écoule en un flux descendant dans une enceinte maintenue en dépression où on pulvérise, en un écoulement parallèle, une solution aqueuse alcaline dans ledit flux descendant qui dépollue l'air et condense les vapeurs et en ce qu'on évacue les gaz non-condensés à l'extérieur de ladite installation en un courant forcé et réglable de sorte à créer et à maintenir une dépression à l'intérieur de ladite enceinte.

La présente invention décrit aussi un dispositif pour le traitement d'un mélange de vapeurs d'eau et d'air, pollué, qui se forme lors de la production de granulat de laitier de haut fourneau par injection d'un jet d'eau dans le débit de laitier fondu dans une installation de granulation, caractérisée par une tour de condensation fermée située au-dessus de l'installation de granulation, destinée à capter ledit mélange de vapeurs et de gaz, par au moins une enceinte oblongue, fermée à son extrémité inférieure et ouverte à son extrémité supérieure, disposée verticalement à l'intérieur de ladite tour fermée, par des gicleurs disposés dans l'intérieur de ladite enceinte, ces gicleurs étant raccordés à une conduite de distribution d'eau alcaline, par au moins un conduit d'écoulement de l'eau de lavage et du condensât débouchant dans l'extrémité inférieure de ladite enceinte, par au moins un conduit d'aspiration des gaz non condensés débouchant dans la partie inférieure de la dite enceinte, par au moins une pompe d'extraction à débit variable raccordée audit conduit d'aspiration destinée à évacuer lesdits gaz et à maintenir une dépression dans ladite enceinte.

Le mélange de vapeurs et d'air pollué par des gaz sulfurés, qui est formé lors de la granulation de laitier de haut fourneau, est canalisé dans un flux ascendant. Ce mouvement ascendant est partiellement un mouvement de convection, renforcé cependant par une extraction des gaz traités non condensés de l'installation.

Une dépression dynamique réglable est créée à l'intérieur de ladite enceinte par l'évacuation contrôlée des gaz non-condensés de la partie inférieur de cette dernière vers l'extérieur de l'installation. La condensation des vapeurs d'eau par arrosage d'eau contribue aussi à maintenir ladite enceinte en dépression. Cette dépression crée dans ladite enceinte un flux descendant du mélange de vapeurs et de gaz. La condensation des vapeurs résulte d'un refroidissement par pulvérisation d'eau froide dans les vapeurs. L'élimination des gaz sulfurés, dont H₂S et SO₂, résulte d' une absorption, d'une précipitation et/ou de réactions d'oxydoréduction des gaz sulfurés dans la solution aqueuse alcaline finement pulvérisée. On notera que l'eau est pulvérisée dans le mélange de vapeurs et de gaz descendants dans ladite enceinte. Il s'établit en conséquence un flux forcé et parallèle d'eau d'arrosage et de gaz et vapeurs entre l'extrémité supérieure ouverte et l'extrémité inférieure fermée de l'enceinte. L'avantage est que l'eau d'arrosage condense les vapeurs, réagit avec les gaz sulfurés et entraîne en même temps les gaz non-condensés vers le fond de l'enceinte où ils sont évacués. Une éventuelle accumulation d'air et de vapeurs non condensées conduisant à un reflux qui empêche les vapeurs polluées d'atteindre la zone de condensation n'est pas possible. On a ainsi éliminé efficacement un phénomène gênant, souvent rencontré dans l'état de la technique actuelle.

L'installation mettant en oeuvre la présente invention pourra équiper la plupart des installations de granulation de laitier de haut fourneau existantes, et ceci à un coût relativement faible. En effet, contrairement à l'installation décrite dans la demande de brevet allemand P 3511958.6, il ne faut pas que l'installation de granulation soit étanche pour les gaz.

Le débit de gaz évacué est ajusté de façon à maintenir l'installation en dépression, ce qui empêche à tout moment les vapeurs polluées de s'échapper de l'installation. Or, lors de la granulation de laitier de haut fourneau, les débits de laitier et, par conséquent, les débits de vapeurs et de gaz sulfurés formés, sont très variables. L'installation de dépollution et de condensation devra, en conséquence, être capable de maîtriser des débits très variables de vapeurs et d'air pollué. Selon la présente invention, cette flexibilité en ce qui concerne les variations des débits de vapeurs et d'air pollués à traiter est assurée en variant le débit du courant d'extraction de l'air dépollué de ladite enceinte.

Selon une réalisation préférentielle de la présente invention, la pompe à débit variable est une pompe à jet d'eau, ce qui permet de laver les gaz non-condensés une seconde fois avec une solution aqueuse. Les polluants sulfurés acides contenus éventuellement dans les gaz non-condensés évacues seront ainsi éliminés efficacement car, à la sortie de ladite pompe, les gaz et la solution alcaline sont mélangés d'une manière turbulente, ce qui favorise les échanges entre les deux phases. Ce deuxième traitement est encore plus efficace si l'eau utilisée pour faire fonctionner ladite pompe est alcaline. Il sera aussi noté que la pompe à jet d'eau ne comporte pas de pièces mécaniques en mouvement, et est particulièrement résistante à une éventuelle attaque par des agents corrosifs.

Le débit de gaz aspiré par la pompe à jet d'eau est directement proportionnel à la quantité de solution alcaline utilisée pour la faire fonctionner. Il en résulte le double avantage que le débit d'air évacue est facilement réglable et que le rapport entre le débit d'air évacué et le débit de solution alcaline reste plus ou moins constant, de sorte à garantir, pour des débits variables, un traitement efficace de l'air évacué.

La solution alcaline utilisée pour la pompe à jet d'eau ainsi que l'eau d'arrosage recueillie dans ladite enceinte sont avantageusement déversées dans le circuit d'eau de refroidissement du laitier, cette eau étant riche en calcaire. Une partie du soufre sera alors éliminée du circuit d'eau de refroidissement sous forme de gypse avec le granulat déshydraté.

Selon une réalisation préférentielle de la présente invention une sonde règle le débit de la pompe en fonction de la dépression mesurée à l'intérieur de l'enceinte. On maintient ainsi une dépression constante à l'intérieur de ladite enceinte si des débits variables de vapeurs sont formés.

Selon une réalisation préférentielle de la présente invention, les vapeurs et gaz formés dans l'installation de déshydratation du granulat, si la déshydratation a lieu dans un bâtiment différent, sont traités dans la tour de condensation de l'installation de granulation. A cette fin, ces gaz et vapeurs sont acheminés vers ladite tour de condensation moyennant une cheminée. Cette cheminée peut-être éventuellement munie d'un clapet de sorte à pouvoir contrôler à tout moment le débit de gaz amené par cette voie dans la tour.

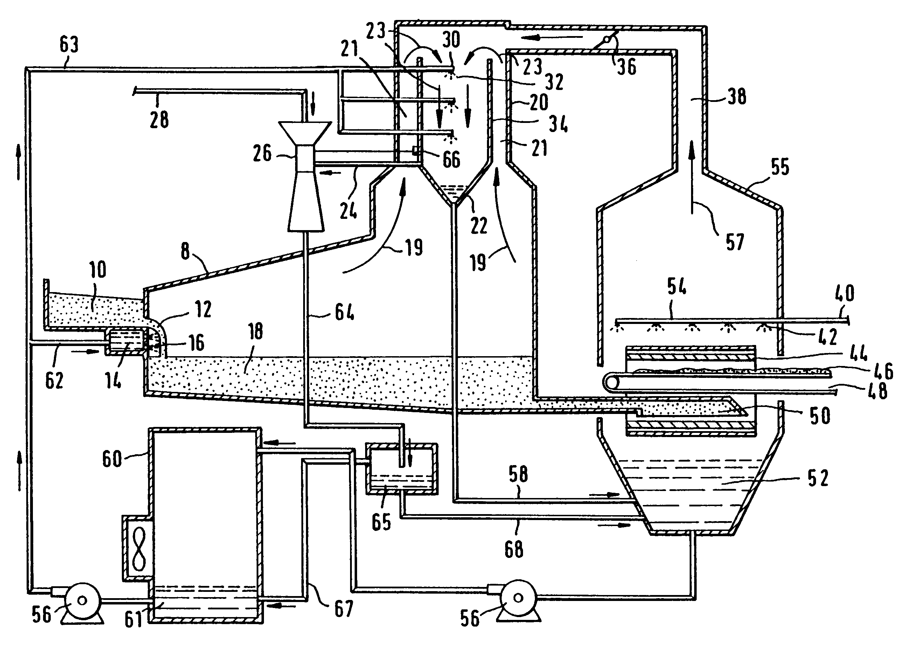

D'autres particularités et caractéristiques ressortiront de la description détaillée d'un mode de réalisation avantageux, présenté ci-dessous, à titre d'illustration, en référence au dessin annexé. Sur ce dessin :
la Figure unique représente schématiquement une réalisation préférentielle d'une installation de traitement des vapeurs polluées formées lors de la granulation de laitier de haut fourneau illustrant cette invention.

Sur la Figure, on voit un bâtiment 8 de granulation érigé au-dessus d'une installation de granulation. Un puissant jet d'eau 16 est injecté à l'aide d'une tête de pulvérisation 14 dans un débit de laitier fondu 12 acheminé par une rigole 10 d'un haut fourneau ou d'une poche de laitier dans le bâtiment 8. Ce jet provoque la formation de granulat de laitier qui tombe dans un bassin 18 de refroidissement. De ce bassin 18, ledit granulat est évacué en continu vers une installation 54 de déshydratation telle que décrite dans le brevet US 4,204,855. Cette installation 54 est séparée du bâtiment 8 de granulation par une barrière d'eau qui empêche que les gaz formés lors de la granulation ne soient entraînés vers l'installation 54 de déshydratation.

Les vapeurs et gaz formés lors du refroidissement brusque du laitier fondu par le jet d'eau 16 ainsi que les gaz et vapeurs qui émanent du bassin 18 suivent un mouvement ascendant et sont captés par une tour 20 fermée située au-dessus du bassin 18. Dans cette tour 20 se trouve une enceinte 34 oblongue cylindrique ou prismatique. Cette enceinte 34 est fermée à sa base inférieure par un fond en forme d'entonnoir 22 et ouverte à sa base supérieure. Sur la Figure, on voit que l'enceinte 34 est installée dans la tour 20 de façon à définir une cheminée 21, formée par une restriction de la section transversale de la tour 20. Cette cheminée canalise le mélange gazeux, formé de vapeurs, de gaz et d'air réchauffés, vers l'entrée de l'enceinte 34. L'enceinte 34 est maintenue en dépression par rapport à l'atmosphère extérieure par une évacuation continue de gaz traités via un conduit 24 situé dans la partie inférieure de l'enceinte 34. A cet effet, le conduit 24 est relié à une pompe 26 à jet d'eau qui maintient un flux descendant 23 du mélange gazeux à traiter dans l'enceinte 34.

Dans l'enceinte 34 sont installés des gicleurs 30. Ces gicleurs 30, qui sont de préférence installés dans plusieurs rangées superposées dans la partie supérieure de l'enceinte 34, sont raccordés a une conduite d'alimentation 63 d'eau alcaline froide. Ils permettent de pulvériser cette eau alcaline froide dans le flux descendant 23 du mélange gazeux. La condensation des vapeurs est obtenue par contact intime entre l'eau froide pulvérisée 32 et les vapeurs. La dépollution de l'air résulte de réactions d'absorption, de précipitation et/ou d'oxydoréduction des gaz sulfurés en solution aqueuse alcaline. La pulvérisation favorise le contact entre les deux phases ce qui a un effet bénéfique sur le déroulement de ces reactions. Il sera noté que les jets d'eau pulvérisés issus des gicleurs ont pour effet secondaire de renforcer la dynamique du flux descendant du mélange gazeux à traiter dans l'enceinte 34 et de favoriser une aspiration des gaz non-condensés et des vapeurs au niveau de l'extrémité supérieure ouverte de l'enceinte 34. Cet effet est d'ailleurs favorisé par la disposition des gicleurs en rangées superposées.

Dans l'enceinte 34, l'eau de pulvérisation et le condensat sont recueillis par le fond en forme d'entonnoir 22 et sont évacués par un conduit 58 d'évacuation.

Le conduit d'alimentation 63 des gicleurs est préférentiellement raccordé à un conduit sous pression 62 qui alimente la tête de granulation 14. Ce conduit 62 est munie d'une pompe 56 et il est raccordé à une tour de refroidissement 60. Cette dernière fait partie d'un circuit de refroidissement de l'eau utilisée pour la granulation et le refroidissement du laitier de haut fourneau. L'eau en provenance de ce circuit de refroidissement du laitier est alcaline (pH entre 8 et 9), et favorise ainsi l'élimination des gaz sulfurés. A cause de sa teneur élevée en calcium lavé du laitier, les gaz sulfurés précipitent, en partie du moins, sous forme de gypse, qui est finalement évacué ensemble avec le granulat 46 déshydraté

Dans la partie inférieure de l'enceinte 34, la phase gazeuse contient donc essentiellement de l'air ayant subi un premier lavage. Cet air est aspirée par la pompe 26 à jet d'eau et peut être traité efficacement une seconde fois, si on utilise une solution aqueuse alcaline 28 pour alimenter la pompe 26 à jet d'eau.

En effet, dans la pompe 26, un débit de solution aqueuse alcaline 28 aspire l'air purifié en provenance de ladite enceinte 34 par effet Venturi. A la sortie de la pompe 26, l'air et la solution aqueuse alcaline 28 sont mélangés d'une manière turbulente. Les contaminants qui subsistent éventuellement après le premier lavage dans le gaz traité aspiré, sont alors éliminés par des réactions analogues à celles décrites plus haut.

La solution aqueuse alcaline 28 utilisée pour le fonctionnement de la pompe 26 a jet d'eau peut avantageusement provenir du bassin de refroidissement 18 ou d'un autre endroit du circuit d'eau de granulation et de refroidissement du laitier car le débit de solution aqueuse alcaline 28 est très faible par rapport au débit d'eau de granulation. La pompe 26 à jet d'eau peut aussi fonctionner avec une solution d'hydroxyde de sodium spécialement préparée ou avec toute autre solution basique adéquate. Le mélange air/eau alcaline issu de la pompe 26 est ensuite acheminé via un conduit 64 dans un bassin fermé 65 où ledit mélange est dégazé. L'air est évacué de la partie supérieure dudit bassin fermé 65 moyennant un conduit 67 vers un bassin 61 faisant partie d'une tour de refroidissement 60 tandis que l'eau alcaline est acheminée de la partie inférieure dudit bassin fermé 65 via un conduit 68 vers un bassin de décantation 52 de l'installation de déshydratation.

Un dégazage préalable n'est pas nécessaire si le mélange air/eau alcaline est directement libéré dans le bassin 61 de ladite tour de refroidissement.

Une sonde 66, installée dans la partie inférieure de l'enceinte 34, mesure la dépression à l'intérieur de celle-ci. Cette sonde 66 peut être utilisée pour régler le débit de la pompe 26 qui évacue le gaz purifié, de façon à maintenir une dépression stable dans l'enceinte 34 .

L'eau de refroidissement circule en circuit fermé entre l'installation 8 de granulation et l'installation 54 de déshydratation. En effet, après injection par la tête de pulvérisation 14, l'eau transporte le granulat dans l'installation 54 de déshydratation. Cette installation 54 de déshydratation est avantageusement composée d' un entonnoir 50 qui répartit les granules sur un cylindre 44 rotatif délimité à l'extérieur par une surface filtrante. Les granules solides sont entraînées par les pales, non visibles sur cette figure, sur le pourtour du cylindre 44 vers le haut. La partie inférieure de ces pales et la paroi du cylindre 44 rotatif sont de nature filtrante de sorte à permettre une première filtration du granulat. Alors que l'eau s'écoule à travers la paroi filtrante du cylindre rotatif, les granules solides sont entraînés par les pales vers le haut. Arrivés dans la moitié supérieure du cylindre, les granules libérés de l'eau commencent à tomber progressivement vers le bas sur une bande 48 transporteuse. Le granulat 46 de laitier déshydraté est ensuite évacué vers une aire de stockage.

La paroi filtrante du cylindre 44 rotatif est nettoyée par des jets 42 d'air comprimé provenant d'une conduite 40 d'air comprimée. L'eau, débarrassée des granules de laitier, est amenée moyennant une pompe 56 vers la tour de refroidissement 60. Après compensation des pertes, l'eau est pompée par la deuxième pompe 56 vers la tête de pulvérisation 14 et en partie vers les gicleurs 30. Les vapeurs d'eau et l'air en provenance de l'installation 54 de déshydratation du granulat peuvent être purifiés avantageusement par la même installation décrite ci-avant. A cet effet, l'installation de déshydratation 54 est munie d'une hotte 55 qui capte le mélange 57 de vapeurs et d'air ascendant par convexion . Ce mélange est acheminé de l'installation de déshydratation 54 vers la tour 20 via une cheminée 38 éventuellement munie d'un clapet 36. Ce clapet 36 permet de contrôler à tout moment le débit de mélange d'air et de vapeurs amené dans la tour 20 par cette voie

L'invention n'est toutefois pas limitée aux modes de réalisation qui ont été décrits et représentés ci-avant, mais elle peut être avantageusement appliquée dans toutes les installations de granulation et de déshydratation de laitier dans lesquelles il y a libération de vapeurs et gaz sulfurés.

## Revendications

1. Procédé pour le traitement d'un mélange de vapeurs d'eau et d'air pollué par des gaz sulfurés et formé lors de la production de granulat de laitier de haut fourneau par injection d'un jet d'eau dans le débit de laitier fondu dans une installation de granulation, caractérisé en ce qu'on canalise d'abord ledit mélange dans un flux ascendant (19) et qu'ensuite le mélange s'écoule en un flux descendant (23) dans une enceinte (34) maintenue en dépression où on pulvérise, en un écoulement parallèle, une solution aqueuse alcaline dans ledit flux descendant qui dépollue l'air et condense les vapeurs et en ce qu'on évacue les gaz non-condensés à l'extérieur de ladite installation en un courant forcé et réglable de sorte à créer et à maintenir une dépression à l'intérieur de ladite enceinte.

2. Procédé pour le traitement d'un mélange de vapeurs d'eau et d'air polluée selon la revendication 1, caractérisé en ce que les gaz non-condensés évacués sont dépollués une deuxième fois par une solution aqueuse alcaline qui est utilisée pour faire fonctionner une pompe à jet d'eau qui évacue lesdits gaz de ladite installation.

3. Dispositif pour le traitement d'un mélange de vapeurs d'eau, d'air et de gaz sulfurés, générés lors de la production de granulat de laitier de haut fourneau par injection d'un jet d'eau dans le débit de laitier fondu dans une installation (8) de granulation comprenant une tour fermée (20) située au-dessus de l'installation de granulation (8), destinée à capter ledit mélange de vapeurs et de gaz, caractérisé
par au moins une enceinte (34) oblongue fermée à son extrémité inférieure (22) et ouverte à son extrémité supérieure, disposée verticalement à l'intérieur de ladite tour fermée (20),
par des gicleurs (30) disposés dans l'intérieur de ladite enceinte (34), ces gicleurs (30) étant raccordés à une conduite de distribution (63) d'eau alcaline,
par au moins un conduit d'écoulement (58) de l'eau de lavage et du condensât débouchant dans l'extrémité inférieure (22) de l'enceinte (34),
par au moins un conduit d'aspiration (24) des gaz non condensés débouchant dans la partie inférieure de la dite enceinte (34),
par une pompe d'extraction (26) à débit variable destinée à évacuer lesdits gaz et à maintenir une dépression dans ladite enceinte (34) et raccordée audit conduit d'aspiration (24).

4. Dispositif selon la revendication 3, caractérisé en ce que la pompe à débit variable utilisée est une pompe (26) à jet d'eau dans laquelle lesdits gaz non-condensés évacués sont en contact intime avec l'eau.

5. Dispositif selon la revendication 4, caractérisé en ce que le refoulement de la pompe (26) est raccordé via un conduit (64) à un bassin fermé (65) de dégazage dont la partie supérieure est raccordée par l'intermédiaire d'un conduit (67) à une tour de refroidissement (60) et dont la partie inférieure est raccordée à un conduit (68) la reliant à un bassin de décantation (52).

6. Dispositif selon l'une quelconque revendication 3 à 5, caractérisé en ce que la pompe (26) est reliée à une sonde (66) de réglage du débit de la pompe (26) en fonction de la dépression à l'intérieur de ladite enceinte (34).

7. Dispositif selon l'une quelconque des revendications 3 à 6, caractérisé en ce qu'une installation de déshydratation (55) est reliée à ladite tour de condensation (20) par une cheminée (38).

8. Dispositif selon la revendication 7, caractérisé en ce que ladite cheminée (38) est munie d'un clapet (36) de réglage des débits de gaz aspirés.

## Claims

1. Method for the treatment of a mixture of water vapours and air, polluted by sulphurous gases and formed during the granulation of blast furnace slag, by the injection of a jet of water into the flow of the molten slag in a granulation installation, characterised in that the said mixture is first channelled into an ascending flux (19) and that the mixture then passes in a descending flux (23) into a vessel (34) held at a reduced pressure where, in a parallel flow, an aqueous alkaline solution is sprayed into the said descending flux which decontaminates the air and condenses the vapours and in that the uncondensed gases are discharged to the outside of the said installation in a forced and adjustable current so as to create and maintain a reduced pressure inside the said vessel.

2. Method for the treatment of a mixture of water vapours and polluted air according to Claim 1, characterised in that the discharged uncondensed gases are decontaminated a second time by an aqueous alkaline solution which is used to operate a water-jet pump which evacuates the said gases from the said installation.

3. Device for the treatment of a mixture of sulphurous water vapours, air and gases, generated during the granulation of blast furnace slag, by the injection of a jet of water into the flow of molten slag in a granulation installation (8) comprising a closed tower (20) located above the granulation installation (8), intended to capture the said mixture of vapours and gases, characterised
by at least one oblong vessel (34), closed at its lower end (22) and open at its upper end, arranged vertically inside the said closed tower (20),
by sprinklers (30) arranged inside the said vessel (34), these sprinklers (30) being connected to a pipe (63) for distributing alkaline water,
by at least one pipe (58) for the flow of washing water and condensate opening out into the lower end (22) of the said vessel (34),
by at least one pipe (24) for the intake of the uncondensed gases opening out into the lower part of the said vessel (34),
by a variable flow-rate extraction pump (26) intended to discharge the said gases and to maintain a reduction of pressure in the said vessel (34) and connected to the said intake pipe (24).

4. Device according to Claim 3, characterised in that the variable flow-rate pump used is a water-jet pump (26) in which the said uncondensed discharged gases are in intimate contact with water.

5. Device according to Claim 4, characterised in that the outlet of the pump (26) is connected via a pipe (64) to a closed degassing basin (65) whose upper part is connected through a pipe (67) to a cooling tower (60) and whose lower part is connected to a pipe (68) connecting it to a settling tank (52).

6. Device according to any one of Claims 3 to 5, characterised in that the pump (26) is connected to a sensor (66) for regulating the throughput of the pump (26) as a function of the pressure reduction inside the said vessel (34).

7. Device according to any one of Claims 3 to 6, characterised in that a dehydration installation (55) is connected to the said condensation tower (20) by a chimney (38).

8. Device according to Claim 7, characterised in that the said chimney (38) is provided with a flap valve (36) for regulating the flow rates of the gases taken in.

## Patentansprüche

1. Verfahren zur Behandlung eines Gemisches aus Wasserdämpfen und Luft, das mit sulfidischen Gasen verschmutzt ist und bei der Erzeugung von Granulat aus Hochofenschlacken durch Einspritzen eines Wasserstrahls in den Mengenfluß geschmolzener Schlacke in einer Granulierungsanlage gebildet wird, dadurch gekennzeichnet, daß zunächst dieses Gemisch in einem aufsteigenden Fluß (19) kanalisiert wird und daß dann das Gemisch in einem absteigenden Fluß (23) in eine in Unterdruck gehaltene Kammer (34) strömt, wo in einer parallelen Strömung eine alkalische wässerige Lösung in diesem absteigenden Fluß zerstäubt wird, welche die Luft reinigt und die Dämpfe kondensiert, sowie dadurch, daß die nicht kondensierten Gase in einem getriebenen und regulierbaren Strom aus dieser Anlage nach draußen evakuiert werden, so daß im Inneren dieser Kammer ein Unterdruck erzeugt und aufrechterhalten wird.

2. Verfahren zur Behandlung eines verschmutzten Gemisches aus Wasserdämpfen und Luft nach Anspruch 1, dadurch gekennzeichnet, daß die evakuierten, nicht kondensierten Gase ein zweites Mal durch eine alkalische wässerige Lösung gereinigt werden, die für den Betrieb einer Wasserstrahlpumpe verwendet wird, welche diese Gase aus der Anlage evakuiert.

3. Vorrichtung zur Behandlung eines Gemisches aus Wasserdämpfen, Luft und sulfidischen Gasen, die bei der Erzeugung von Granulat aus Hochofenschlacken durch Einspritzen eines Wasserstrahls in den Mengenfluß geschmolzener Schlacke in einer Granulierungsanlage (8) entstehen, bestehend aus einem geschlossenen, über der Granulierungsanlage (8) liegenden Turm (20), der dieses Gemisch aus Dämpfen und Gasen auffangen soll, gekennzeichnet
durch mindestens eine längliche, an ihrem unteren Ende (22) geschlossenen und an ihrem oberen Ende offenen Kammer (34), die im Inneren dieses geschlossenen Turms (20) senkrecht angeordnet ist,
durch Spritzdüsen (30), die im Inneren dieser Kammer (34) angeordnet sind, wobei diese Spritzdüsen (30) an eine Verteilerleitung (63) für alkalisches Wasser angeschlossen sind,
durch mindestens eine Abflußleitung (58) für das Waschwasser und das Kondensat, die in dem unteren Ende (22) der Kammer (34) mündet,
durch mindestens eine Ansaugleitung (24) für die nicht kondensierten Gase, die in dem unteren Teil dieser Kammer (34) mündet,
durch eine Abzugspumpe (26) mit veränderlicher Fördermenge, die diese Gase evakuieren und einen Unterdruck in der Kammer (34) aufrechterhalten soll und an diese Ansaugleitung (24) angeschlossen ist.

4. Vorrichtung nach Anspruch 3, dadurch gekennzeichnet, daß die eingesetzte Pumpe mit veränderlicher Förderleistung eine Wasserstrahlpumpe (26) ist, in der die nicht kondensierten, evakuierten Gase in engem Kontakt mit dem Wasser sind.

5. Vorrichtung nach Anspruch 4, dadurch gekennzeichnet, daß die Förderung der Pumpe (26) über eine Leitung (64) an ein geschlossenes Entgasungsbecken (65) angeschlossen ist, dessen oberer Teil über eine Leitung (67) an einen Kühlturm (60) angeschlossen ist und dessen unterer Teil an eine Leitung (68) angeschlossen ist, die ihn mit einem Absetzbecken (52) verbindet.

6. Vorrichtung nach jedem einzelnen der Ansprüche 3 bis 5, dadurch gekennzeichnet, daß die Pumpe (26) mit einer Sonde (66) zur Regelung der Förderleistung der Pumpe (26) je nach dem im Inneren der Kammer (34) herrschenden Unterdruck verbunden ist.

7. Vorrichtung nach jedem einzelnen der Ansprüche 3 bis 6, dadurch gekennzeichnet, daß eine Entwässerungsanlage (55) über einen Schacht (38) mit dem Kondensationsturm (20) verbunden ist.

8. Vorrichtung nach Anspruch 7, dadurch gekennzeichnet, daß dieser Schacht (38) mit einer Klappe (36) zur Regelung der angesaugten Gasmengen versehen ist.
